# EUROPÄISCHE PATENTSCHRIFT

(11) **EP 0 416 485 B1**
(45) Veröffentlichungstag und Bekanntmachung des Hinweises auf die Patenterteilung: **19.04.1995**
(21) Anmeldenummer: 90116806.2
(22) Anmeldetag: 01.09.1990
(51) Int. Cl.: B60R 13/10, G09F 7/18

(54) **Zeichenschild mit Unterlage zur diebstahlsicheren Befestigung an einem Fahrzeug**
Sign with anti-theft-support for attachement to a vehicle
Enseigne avec support antivol pour fixation à un véhicule

(30) Priorität: 05.09.1989 DE 8910568 U
(43) Veröffentlichungstag der Anmeldung: 13.03.1991
(73) Patentinhaber: Lisson, Hugo, D-61279 Grävenwiesbach (DE)
(72) Erfinder: Lisson, Hugo, D-61279 Grävenwiesbach (DE)
(74) Vertreter: Jochem, Bernd, Dipl.-Wirtsch.-Ing.

(56) Entgegenhaltungen:
- DE-C- 957 819
- GB-A- 1 604 189
- GB-A- 2 150 727

## Beschreibung

Die Erfindung betrifft ein Zeichenschild mit Unterlage zur diebstahlsicheren Befestigung an einem Trägerteil eines Fahrzeugs, insbesondere eines Kraftfahrzeugs, wobei an den Langsseiten des Zeichenschilds rückseitig jeweils ein Steg vorgesehen ist, dessen freier Rand nach Art einer Kralle ausgebildet ist, und die Unterlage ein elastischer Halteteil ist, welcher mit zum Trägerteil hin abgebogenen Seitenkanten in die Krallen einschnappbar ist.

Ein derartiges Zeichenschild ist aus der GB-A-1 604 189 bekannt. Es handelt sich um ein insgesamt im wesentlichen ebenes Schild, das zur Montage an einem Kraftfahrzeug in einem seinen Rand umgreifenden Rahmen aufgenommen wird. Der an den Schmalseiten des Zeichenschilds geteilte Rahmen ist an seiner Unterseite mit sich entlang der Längsseiten erstreckenden Krallen geformt, deren Nasen nach außen weisen. Deshalb müssen sich die mit ihnen zusammenwirkenden elastischen Rastnasen am Halteteil auf der Außenseite der Krallen befinden, wo sie zwar durch einen äußeren, nach unten weisenden Vorsprung am Rahmen überdeckt werden können, jedoch ebenso wie der im Extrusionsverfahren aus Kunststoff oder Leichtmetall hergestellte Rahmen selbst gewaltsamen Angriffen mit Werkzeugen ausgesetzt sind, die das Zeichenschild unbeschädigt lassen. Es kann daher nach der Zerstörung des Rahmens unversehrt vom Fahrzeug abgenommen und an einem anderen Wagen angebracht werden.

Die DE-C-957 819 beschreibt eine Plakette, die auf einem Kraftfahrzeug-Kennzeichenschild dadurch zu befestigen ist, daß zunächst ein nach außen offenes Gehäuse auf dem Zeichenschild angeschweißt und dann die auf der Unterseite im mittleren Bereich mit einer ringförmigen Kralle geformte Plakette gegen Federkraft in das Gehäuse eingeführt und hinter einem Gummiring eingerastet wird. Die Plakette ist danach beidseitig federnd gehalten.

Schließlich ist es aus der DE-U 81 14 401.6 bekannt, zum Schutze eines schwachen, leicht zu beschädigenden Zeichenschildes zwischen der Rückseite des Zeichenschildes und einem vertieften Abschnitt der Karosserie ein Verstärkungsschild einzufügen. In dem Verstärkungsschild sind wenige Löcher ausgebildet, damit es mit Hilfe von Befestigungsschrauben in dem vertieften Abschnitt der Karosserie festgehalten wird, während ein umlaufender Randwulst des Verstärkungsschildes auf dem Rand der übrigen Karosserie aufliegt. Die Größe und Gestalt des Randwulstes sind zugleich derart bemessen, daß der Rand des Zeichenschildes vom Randwulst des Verstärkungsschildes eng umschlossen wird. Zwischen der Bodenfläche des Verstärkungsschildes und der Fläche des vertieften Abschnittes der Karosserie sind Abstandshalter eingefügt; mit ihrer Hilfe kann die Oberfläche des Zeichenschildes mit der Oberfläche der Karosserie jenseits des Randwulstes zum Fluchten gebracht werden. Über die Art der Befestigung des Zeichenschildes an dem Verstärkungsschild fehlt eine Aussage. Wegen der leichten Konstruktion des Zeichenschildes ist es jedoch unwahrscheinlich, daß die Befestigungsschrauben, die das Verstärkungsschild an der Karosserie festhalten, auch zur Befestigung des Zeichenschildes an dem Verstärkungsschild benutzt werden.

Der Erfindung liegt die Aufgabe zugrunde, ein Zeichenschild mit Unterlage zu schaffen, welches einen von Hand auszuführenden, mühelosen Befestigungsvorgang erlaubt und aus seiner endgültigen Befestigungslage nur durch Zerstörung zu entfernen ist.

Diese Aufgabe wird erfindungsgemäß dadurch gelöst, daß die Stege durch abgebogene Längskanten des Zeichenschilds gebildet und die Krallen nach einwärts zurückgebogen sind, ein zwischen dem Halteteil und dem Zeichenschild normal zu dessen Sichtfläche wirkendes, beim Einschnappen in das Zeichenschild gespanntes Federmittel vorhanden ist, und der Halteteil sowie das Zeichenschild zur Befestigung innerhalb einer Einsenkung vorgesehen sind, deren Begrenzungswand im montierten Zustand den Rand des Zeichenschilds mit geringem Spiel umschließt.

Die Erfindung bietet den Vorteil, daß man nach der Montage des Zeichenschilds innerhalb der Einsenkung nicht mehr an die Befestigungsstellen des Zeichenschilds und seine Unterlage herankommt, so daß eine Entfernung nur durch Zerstörung möglich ist.

Nachstehend werden einige Ausführungsbeispiele der Erfindung an Hand einer Zeichnung näher erläutert. Es zeigen:
- Figur 1: eine teilweise unterbrochene Draufsicht auf ein an einem flachen Trägerteil eines Fahrzeugs befestigtes Unterschild mit einer darin ausgebildeten Einsenkung;
- Figur 2: einen Querschnitt durch ein Befestigungsschild mit Unterlage im montierten Zustand, wobei sich die Schnittebene quer zu den Längsseiten des Zeichenschilds erstreckt;
- Figur 3: einen Längsschnitt parallel zu den Längskanten des montierten Zeichenschilds nach Figur 2;
- Figur 4: ein weiteres Ausführungsbeispiel in einer Ansicht entsprechend Figur 2;
- Figur 5: einen Längsschnitt entsprechend Figur 3 durch das Ausführungsbeispiel nach Figur 4.

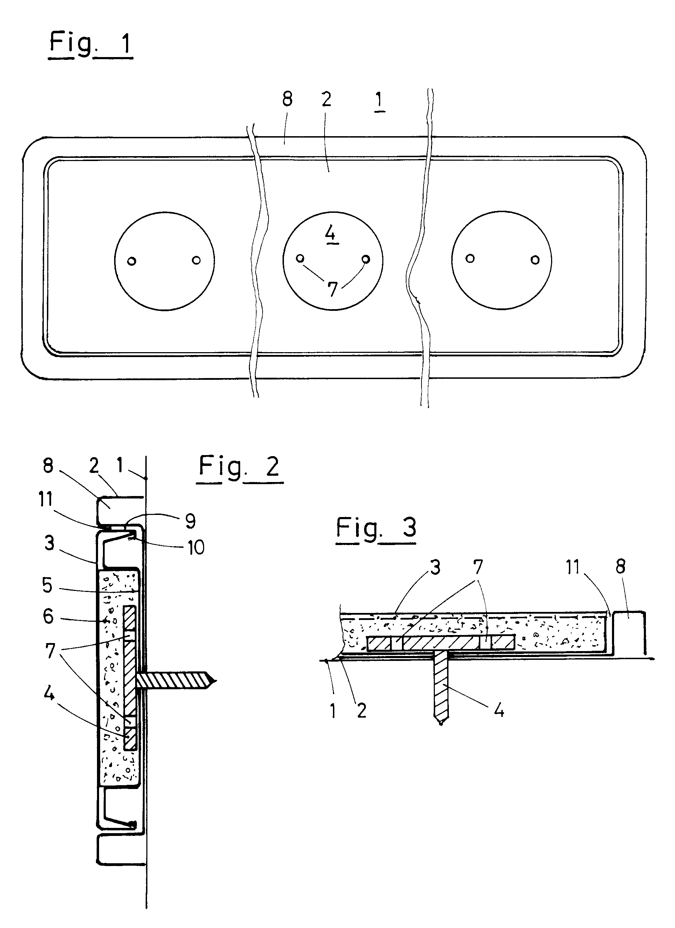

Figur 1 ist eine Draufsicht auf ein (unterbrochen dargestelltes) Unterschild 2 aus Aluminium oder Kunststoff, das mit drei Blechtreibschrauben 4 auf einem vorzugsweise ebenen Karosserieteil 1 eines Fahrzeuges befestigt wird. Um eine möglichst gleichförmige Anlage des Unterschildes 2 an dem Karosserieteil 1 zu erreichen, besitzen die Blechtreibschrauben 4 einen großflächigen Kopf, in dem zwei Löcher 7 eingelassen sind; beim Einziehen der Blechtreibschrauben 4 in den Karosserieteil 1 greift ein Einsteckschlüssel (nicht gezeigt) in die beiden Löcher 7 ein. Das Material des Gewindeteiles der Blechtreibschrauben 4 besteht aus einem gehärteten Stahl, damit sie in den Karosserieteil 1 des Fahrzeuges ihr eigenes Gewinde mit einem Durchmesser von ca. 6 mm einschneiden können.

Wie in Verbindung mit den Figuren 2 und 3 erkennbar ist, besteht das Unterschild 2 mit einem umlaufenden, zusammenhängenden, erhabenen Randwulst 8 von fast quadratischem Querschnitt (ca. 15 x 15 mm) aus einem Stück. Die Oberseite dieses Randwulstes 8, die somit von der Oberfläche des Karosserieteiles 1 einen wesentlichen Abstand hat, fluchtet im wesentlichen mit der als Sichtfläche dienenden Oberseite eines Zeichenschildes 3. Infolgedessen wird ein jeglicher Schattenwurf auf die Sichtfläche, selbst bei einer stark von einer Seite kommenden, fast tangierenden Bestrahlung des Zeichenschildes 3, ausgeschlossen.

In Figur 2 ist das Zeichenschild 3 mit den Hilfsmitteln dargestellt, die es in seiner endgültigen Befestigungslage am Karosserieteil 1 festhalten, aus der es nicht entfernt werden kann, ohne für eine erneute Verwendung unbrauchbar zu werden. Zu diesen Hilfsmitteln gehört ein Halteblech 5, vorzugsweise ein verzinktes Stahlblech von etwa 0,8 mm Dicke, das etwa ebenso groß ist wie das Zeichenschild 3 und von sich aus eine gewisse Elastizität besitzt. Das Halteblech 5 hat einen ebenen Boden, der, unmittelbar auf der Innenfläche des Unterschildes 2 aufliegend, wie das Unterschild 2 selbst von den drei Blechtreibschrauben 4 möglichst gleichförmig gegen die ebene Oberfläche des Karosserieteiles 1 angedrückt wird. Die langen Seitenkanten des Halteblechs 5 sind in einer gewissen Breite schräg zur Oberfläche des Karosserieteiles 1 hin abgebogen und enden dicht vor oder direkt an der zur Oberfläche des Karosserieteiles 1 nahezu senkrechten inneren Wand des Randwulstes 8. Dieser Rand des Haltebleches kann zur Erreichung einer günstigeren Nachgiebigkeit etwas dünner als das übrige Halteblech 5 ausgebildet sein.

Ein weiteres Hilfsmittel, um das Zeichenschild 3 in seiner Befestigungslage an dem Karosserieteil 1 festzusetzen, sind an den beiden gegenüberliegenden Längsrändern des Zeichenschildes 3 um ca. 90° nach hinten abgebogene Stege 9, die an ihrem freien Rand nochmals gebogen, nämlich zu einer widerhakenähnlichen Kralle 10 zurückgebogen sind, wie in Figur 2 gezeigt ist. Da zwischen den Stegen 9 und der inneren Wand des Randwulstes 8 ein gewisses Spiel vorhanden ist, läßt sich das Zeichenschild 3 ohne weiteres von Hand in seine Befestigungslage einbringen. Während solch einer Einsetzbewegung von Hand kommt die am Zeichenschild 3 vorgesehene Kralle 10 mit dem schrägen Rand des Haltebleches 5 in Berührung; da die Einsetzbewegung fortdauert, drückt die Kralle 10 diesen Rand anschließend von der inneren Wand des Randwulstes 8 weg, bis sie schließlich in der Befestigungslage des Zeichenschildes 3 von dem Rand des Haltebleches 5 freikommt und der Rand infolge seiner Elastizität in seine ursprüngliche Stellung zurückspringt oder zumindest zurückzuspringen sucht; dabei kommt der Rand des Haltebleches 5 hinter der Kralle 10 zur Anlage und bildet zugleich eine Sperre, die eine jegliche Herausnahme des Zeichenschildes 3 aus dem vom Randwulst 8 begrenzten Innenbereich des Unterschildes 2 nach außen unterbindet.

Falls das Halteblech 5 aus einem gut biegsamen, elastischen Material in einer von der Darstellung in Figur 2 abweichenden Form ausgebildet werden würde, könnte es nicht nur mit seinem Rand hinter der Kralle 10 am Steg 9, sondern auch gegen die Rückseite des Zeichenschildes 3 anliegen. Solch eine abweichende Form käme dann zustande, wenn an der Stelle der beiden oberen, dem Zeichenschild zugewendeten Ecken eine einzige Rundung angewendet würde. Auch diese Ausführungsform wäre im praktischen Gebrauch voll einsatzfähig.

Wie aus einem Vergleich der Figuren 2 und 3 zu erkennen ist, von denen Figur 2 einen Querschnitt parallel zu den kurzen Seiten des Zeichenschildes 3 und Figur 3 einen Teilquerschnitt parallel zu den langen Seiten des Zeichenschildes 3 zeigt, unterliegt der kleine Spielraum 11 zwischen dem Rand des Zeichenschildes 3 und dem Randwulst 8 des Unterschildes 2 gewissen Größenschwankungen. Wegen dieses Spielraumes 11 wird die Konstruktion aus dem Zeichenschild 3 und dem elastischen Halteblech 5 zu einem mechanischen Schwingungsgebilde, das von gewissen Motordrehzahlen zu Resonanzschwingungen angeregt wird und dabei in unangemessener Weise in einer Folge gegen Randwulst 8 schlägt, wodurch unerwünschte Klopfgeräusche zu hören sein könnten.

Bei der in den Figuren 2 und 3 gezeigten Ausführungsform wird daher ein Element aus Schaumstoff 6 zur Stabilisierung des zuvor genannten mechanischen Schwingungsgebildes zwischen der Rückseite des Zeichenschildes 3 und der Oberseite des Haltebleches 5 eingefügt. Die meisten Schaumstoffe aus Kunststoff oder Gummi haben bis zu einem gewissen Grad elastische Merkmale, insofern als bei einer großflächigen Belastung einer Schaumstoffplatte deren Dicke etwas abnimmt und bei der nachfolgenden Entlastung wieder zunimmt, wenn auch nicht unbedingt die vor der Belastung vorhandene Dicke wieder erreicht wird. Diese Eigenschaft des Schaumstoffs wird voll genutzt, nämlich auch zur Erzielung eines Federdruckes auf die Unterseite des Zeichenschildes, um die Verkrallung mit dem Halteblech spielfrei zu halten.

Der Schaumstoff 6 kann natürlich auch nur stellenweise zwischen der Rückseite des Zeichenschildes 3 und dem ebenen Boden des Haltebleches 5 und/oder der dem Zeichenschild 3 zugekehrten Seite des großflächigen Kopfes der Blechtreibschrauben 4 eingelegt sein. Ebenso kann der Schaumstoff 6 auch mit seinen Kontaktflächen an dem Zeichenschild 3, dem Halteblech 5 und/oder an dem Kopf der Blechtreibschrauben 4 durch ein Klebemittel angeheftet sein, um das oder die Stücke des Schaumstoffes 6 leichter handhaben zu können. Der hier angewendete Schaumstoff 6 soll so gewählt sein, daß er weder altersbedingten, starken Schrumpfungserscheinungen noch einer Verrottung unterliegt.

In der Praxis kann zwecks Materialeinsparung die Dicke des Zeichenschildes 3 auf 0,5 mm herabgesetzt werden, wenn es die Härte des Materials erlaubt. Wenn es aus irgendwelchen Gründen von dem Fahrzeug entfernt, also aus seiner Befestigungslage am Karosserieteil 1 befreit werden soll, muß die Spitze einer Stahlblechschere (nicht gezeigt) in den Spielraum 11 (Figur 3) zwischen dem Rand des Zeichenschildes 3 und dem Randwulst 8 des Unterschildes 2 etwa in der Mitte der einen kurzen Seite eingeführt und das Zeichenschild 3 in seiner Längsrichtung etwa an der Mittellinie aufgeschnitten werden, wobei es in zwei Teile zerlegt wird. Dadurch werden bei diesem Ausführungsbeispiel die Schrauben 4 zugänglich, und nach deren Lösen können die beiden Hälften des Zeichenschildes 3 aus der Befestigungslage befreit werden. Infolge der Zerlegung in zwei etwa gleiche Teile ist jedoch das Zeichenschild 3 für eine erneute Verwendung unbrauchbar geworden. Ein Versuch, das Unterschild 2 z. B. mit Hilfe eines Meißels, der zwischen der Oberfläche des Karosserieteiles 1 und der aufliegenden Seite des Unterschildes 2 angesetzt wird, von dem Karosserieteil 1 unbeschädigt abzulösen, ist wegen des großflächigen Kopfes der Blechtreibschrauben 4 völlig aussichtslos. Auch muß, um an diese breitköpfigen Schrauben überhaupt heranzukommen und sie freizulegen, vorweg das darüberliegende Zeichenschild derart großflächig aufgerissen oder durchlöchert werden, daß es dadurch völlig zerstört wird und für eine Wiederverwendung ausscheidet. Daher ist das Zeichenschild 3 gemäß der Erfindung in seiner Befestigungslage am Fahrzeug tatsächlich diebstahlsicher angebracht.

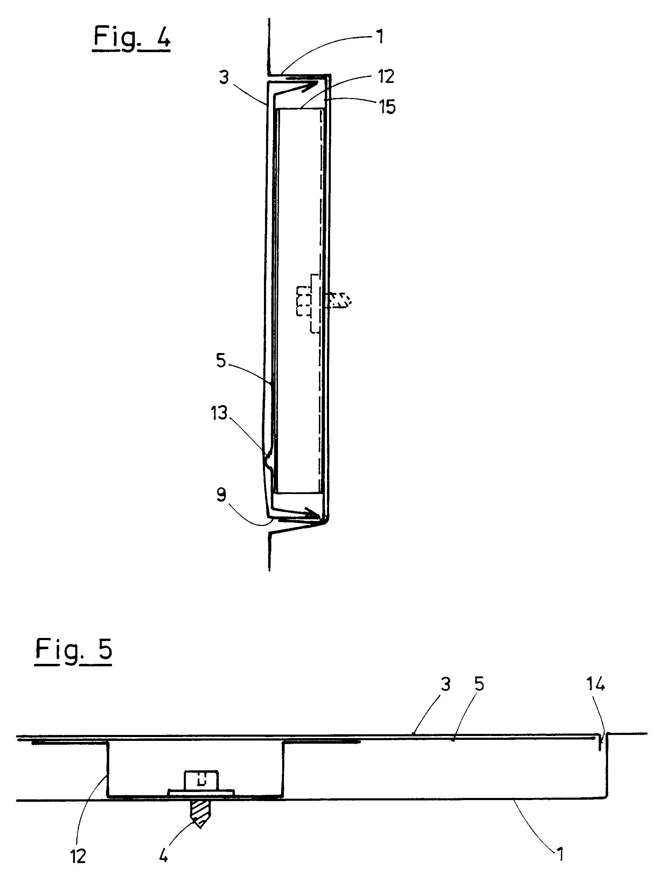

Das Ausführungsbeispiel nach Figur 4 und 5 unterscheidet sich von dem nach Figur 1 bis 3 zunächst dadurch, daß kein Unterschild 2 benötigt wird, weil die zur Aufnahme des Zeichenschildes 3 benötigte Einsenkung unmittelbar im Trägerteil 1 des Fahrzeugs ausgebildet ist.

Eine weitere Abweichung von der zuerst beschriebenen Ausführung ist die andere Form des Haltebleches 5. Dieses hat, abgesehen von den wie gemäß Figur 2 schräg nach außen zum Boden der Einsenkung hin abgewinkelten Längskanten, die Form einer im wesentlichen ebenen Platte, welche sich im montierten Zustand unmittelbar unterhalb des Zeichenschildes 3 erstreckt. Der Abstand zum Boden der Einsenkung wird durch Abstandhalter 12 überbrückt, die sich im wesentlichen über die Breite des Halteteiles 5 erstrecken und vorzugsweise aus im wesentlichen U-förmig gebogenen Blechstreifen bestehen, die an von den freien Schenkelenden abgewinkelten Flanschrändern mit dem plattenförmig ebenen Bereich des Halteteils 5 z. B. durch Punktschweißen verbunden sind. Es können z. B. zwei bis vier solcher Abstandhalter 12 vorhanden sein.

Abstandhalter 12 mit der beispielhaft gezeigten Form bieten den weiteren Vorteil, daß in ihrem Hohlraum angeordnete Befestigungsschrauben 4 unzugänglich sind. Bei der Herstellung der Verbindung kann z. B. so vorgegangen werden, daß zunächst die Abstandhalter 12 mit dem Trägerteil 1 des Fahrzeuges verschraubt oder verschweißt werden und anschließend der plattenförmig ebene Bereich des Halteteiles 5 mit den Abstandhaltern 12 verschweißt wird. Wenn ein Fahrzeug solchermaßen für die Montage des Zeichenschildes 3 vorbereitet ist, braucht dieses nur noch gegen den Halteteil 5 gedrückt und dadurch in seiner endgültigen Lage eingeschnappt zu werden.

Bei der Ausführung nach Figur 4 und 5 könnten auf der Oberseite des Halteteiles 5 Federn befestigt sein, die im montierten Zustand gegen die Unterseite des Zeichenschildes 3 drücken. Dargestellt ist aber noch eine weitere Variante eines Federmittels. Dieses wird nämlich vorzugsweise durch den wegen der Einschnappfunktion ohnehin elastischen Halteteil 5 gebildet, indem dieser neben seiner einen Längsseite mit einer sich über die Länge erstreckenden Sicke 13 versehen ist, die im montierten Zustand elastisch nachgiebig gegen die Unterseite des Zeichenschildes 3 drückt. Bei der Montage dieser Ausführungsform wird vorzugsweise so vorgegangen, daß zunächst an derjenigen Längsseite, neben welcher sich die Sicke 13 befindet, die abgebogene Randkante des Halteteiles 5 mit der widerhakenähnlichen Kralle 10 des Zeichenschildes 3 in Eingriff gebracht wird. Dann wird das Zeichenschild 3 um diese Längskante gegen die plattenförmige Hauptfläche des Halteteiles 5 hin verschwenkt, wobei zunächst die Sicke 13 an der Unterseite des Zeichenschildes 3 zur Anlage kommt und dann an der gegenüberliegenden Längsseite die abgebogene Seitenkante des Halteteiles 5 in die widerhakenähnliche Kralle 10 des Zeichenschildes 3 einschnappt.

Um das erwähnte Verschwenken des Zeichenschildes 3 bei der Montage zu ermöglichen, ist gemäß Figur 4 die untere, in der Nähe der Sicke 13 befindliche Begrenzungswand der Einsenkung im Trägerteil 1, z. B. dem Karosserieblech, schräg geneigt, während oben die Wandung der Einsenkung mit deren Boden im wesentlichen einen rechten Winkel bildet.

Wegen der zuletzt beschriebenen Art der Montage könnte auch die in Figur 4 unten gezeigte abgebogene Seitenkante des Halteteiles 5 mit dessen plattenförmig ebenen Bereich einen weiter an 90° angenäherten Winkel bilden, während oben die Seitenkante des Halteteiles 5 zweckmäßigerweise eine stärkere Schräglage hat, so daß sich bei der Montage der obere Steg 9 mit Kralle 10 bis zum Einschnappen darüber hinwegführen läßt.

Es versteht sich, daß die Anordnung gemäß Fig. 4 derart umgekehrt sein kann, daß sich die unten gezeigten Einzelheiten, wie die Sicke 13 usw., oben befinden. Dann wird zunächst oben die Kralle 10 mit dem Halteblech 5 in Eingriff gebracht und anschließend die untere Kante des Zeichenschildes zum Halteblech hin verschwenkt und die untere Kralle 10 eingeschnappt.

Eine weitere Alternative zur Ausführung nach Figur 1 bis 3 besteht darin, daß die widerhakenähnlichen Krallen 10 keinen U-förmigen, sondern vorzugsweise einen V-förmigen Querschnitt haben, wobei es sich als zweckmäßig erwiesen hat, die Seitenkanten des Halteblechs 5 nach Art einer Schneide zu schärfen oder dünner als im mittleren Teil des Halteblechs zu gestalten. Möglich wäre auch ein einfacher L-förmiger oder sonstiger Querschnitt, bei dem die freien Enden der Stege 9 derart einwärts gebogen sind, daß die Seitenkanten des Halteblechs 5 dahinter eingreifen können.

Wie in Figur 5 gezeigt, sind vorzugsweise auch die an den Schmalseiten des Zeichenschildes 3 befindlichen Randkanten 14 von der Sichtfläche aus nach hinten abgebogen und verhindern so das Einführen eines Werkzeugs in den Spalt zwischen Zeichenschild 3 und Halteteil 5.

Aus ähnlichen Erwägungen kann gemäß Figur 4 zwischen dem Halteteil 5 und dem Trägerteil 1 - oder stattdessen dem Unterschild 2 gemäß Figur 2 - ein Sicherungsblech 15 eingesetzt sein. Die Blechtreibschrauben 4 oder sonstigen Befestigungsmittel des Halteteiles 5 fixieren gleichzeitig auch das Sicherungsblech 15. Dieses liegt im montierten Zustand auf dem Boden der Einsenkung und ragt mit sich entlang der Längsseiten erstreckenden Randstegen nach oben, deren Abstand so zu bemessen ist, daß sie nach der Montage unter einer Vorspannung gegen die Außenseiten der Stege 9 des Zeichenschildes 3 anliegen. Zu diesem Zweck können im Ausgangszustand vor der Montage die Randstege des Sicherungsbleches 15 leicht konvergierend geneigt sein. Zur Erleichterung der Montage ist es zweckmäßig, in diesem Fall das freie Ende wenigstens des oberen Stegs 9 des Zeichenschilds 3 schräg zum gegenüberliegenden Steg hin abzuwinkeln, so daß in der Endphase der Montage auf der zum Einschnappen verschwenkten Seite des Zeichenschilds dessen Steg 9 in das Sicherungsblech 15 hineingleitet.

Ein Sicherungsblech 15 kommt auch in solchen Fällen infrage, wo nur eine flache oder keine Einsenkung vorhanden ist. Dann werden allein durch die Seitenkanten des Sicherungsblechs 15 die Verbindungsstellen, an denen das Halteblech 5 in die Krallen 10 des Zeichenschildes 3 eingreift, nach außen abgedeckt.

Um auch die Möglichkeit auszuschließen, daß vom Kofferraum eines Fahrzeuges aus durch Hammerschläge die Blechtreibschrauben 4 nach außen herausgeschlagen und dadurch das Zeichenschild samt Unterlage vom Fahrzeug abgetrennt wird, können Schrauben mit einem Nietkopf verwendet werden, der im montierten Zustand kofferraumseitig am Karosserieblech anliegt, während auf der Außenseite der Halteteil 5 bzw. die mit ihm verbundenen Abstandhalter 12 durch auf diese Schrauben aufgeschraubte Muttern und Unterlegscheiben gehalten werden.

## Patentansprüche

1. Zeichenschild (3) mit Unterlage zur diebstahlsicheren Befestigung an einem Trägerteil (1) eines Fahrzeugs, wobei an den Längsseiten des Zeichenschilds (3) rückseitig jeweils ein Steg (9) vorgesehen ist, dessen freier Rand nach Art einer Kralle (10) ausgebildet ist, und die Unterlage ein elastischer Halteteil (5) ist, welcher mit zum Trägerteil (1) hin abgebogenen Seitenkanten in die Krallen (10) einschnappbar ist, **dadurch gekennzeichnet**, daß die Stege (9) durch abgebogene Längskanten des Zeichenschilds (3) gebildet und die Krallen (10) nach einwärts zurückgebogen sind, ein zwischen dem Halteteil (5) und dem Zeichenschild (3) normal zu dessen Sichtfläche wirkendes, beim Einschnappen in das Zeichenschild (3) gespanntes Federmittel (6, 13) vorhanden ist, und der Halteteil (5) sowie das Zeichenschild (3) zur Befestigung innerhalb einer Einsenkung vorgesehen sind, deren Begrenzungswand im montierten Zustand den Rand des Zeichenschilds (3) mit geringem Spiel umschließt.

2. Zeichenschild mit Unterlage nach Anspruch 1, **dadurch gekennzeichnet**, daß die Einsenkung in einem Unterschild (2) ausgebildet ist, welches zwischen dem Halteteil (5) und dem Trägerteil (1) einspannbar ist und im montierten Zustand mit einem Randwulst (8) den Rand des Zeichenschilds (3) mit geringem Spiel umschließt.

3. Zeichenschild mit Unterlage nach Anspruch 1 oder 2, **dadurch gekennzeichnet**, daß der Halteteil (5) ein bis auf die abgebogenen Seitenkanten im wesentlichen ebenes Blech mit an der Unterseite angebrachten Abstandhaltern (12) ist, welche am Trägerteil (1) befestigbar sind.

4. Zeichenschild mit Unterlage nach einem der Ansprüche 1 bis 3, **dadurch gekennzeichnet**, daß das Federmittel durch das im montierten Zustand mit wenigstens einer Sicke (13) an der Rückseite des Zeichenschilds (3) anliegende, elastische Halteteil (5) gebildet ist.

5. Zeichenschild mit Unterlage nach Anspruch 4, **dadurch gekennzeichnet**, daß sich die Sicke (13) parallel zu und näher an der einen Längsseite des Halteteils (5) erstreckt und die an dessen anderer Längsseite angeordnete Seitenkante derart schräg abgebogen ist, daß sie durch Verschwenken des Zeichenschilds (3) um die zuerst in Eingriff gebrachte, gegenüberliegende Randkante in Eingriff mit der Kralle (10) zu bringen ist.

6. Zeichenschild mit Unterlage nach einem der Ansprüche 1 bis 5, **dadurch gekennzeichnet**, daß in der Einsenkung unter dem Halteteil (5) ein Sicherungsblech (15) befestigbar ist, welches im montierten Zustand mit aufwärts gebogenen Randkanten unter Vorspannung an den Außenseiten der Stege (9) des Zeichenschilds (3) anliegt.

7. Zeichenschild mit Unterlage nach einem der Ansprüche 1 bis 6, **dadurch gekennzeichnet**, daß das Zeichenschild (3) auch an seinen Schmalseiten aus der Sichtfläche nach hinten abgebogene Randkanten (14) hat.

8. Zeichenschild mit Unterlage nach Anspruch 1 oder 2, **dadurch gekennzeichnet**, daß das Federmittel ein am Halteteil (5) oder Zeichenschild (3) befestigbares gesondertes Teil (6) aus einem elastischen Material, wie z. B. Federstahl oder Schaumstoff, ist.

9. Zeichenschild mit Unterlage nach einem der vorhergehenden Ansprüche, **dadurch gekennzeichnet**, daß das Halteteil (5) durch Schrauben (4) mit großflächig an ihm anliegenden Köpfen, Muttern oder Unterlegscheiben am Trägerteil (1) befestigbar ist.

10. Zeichenschild mit Unterlage nach Anspruch 9, **dadurch gekennzeichnet**, daß die Schrauben Blechtreibschrauben (4) aus gehärtetem Stahl sind.

## Claims

1. A number plate (3) with a base for thief-proof mounting on a supporting part (1) of a vehicle, wherein a respective web (9) is provided at the rear along the longitudinal sides of the number plate (3), the free edge of which web is formed in the manner of a claw (10), and the base is a flexible retaining member (5) which can be snap-fitted into the claws (10) and with lateral edges bent towards the supporting part (1), characterised in that the webs (9) are formed by bent-over longitudinal edges of the number plate (3) and the claws (10) are bent back inwards, a resilient means (6, 13) is provided between the retaining member (5) and the number plate (3), which acts normal to its visible surface and which is tensioned upon being snap-fitted into the number plate (3), and the retaining member (5) and the number plate (3) are adapted to be secured within a recess, the boundary wall of which in the assembled condition encloses the rim of the number plate (3) with slight clearance.

2. A number plate with a base according to Claim 1, characterised in that the recess is formed in an underplate (2) which can be clamped between the retaining member (5) and the supporting part (1), and in the assembled condition encloses with a peripheral bead (8) the rim of the number plate (3) with slight clearance.

3. A number plate with a base according to Claim 1 or Claim 2, characterised in that the retaining member (5) is a substantially flat sheet, except for the bent-over lateral edges, with spacers (12) fixed to the underside which can be secured to the supporting part (1).

4. A number plate with a base according to any one of Claims 1 to 3, characterised in that the resilient means is formed by the flexible retaining member (5) which, in the assembled condition, is applied by at least one rib (13) against the rear side of the number plate (3).

5. A number plate with a base according to Claim 4, characterised in that the rib (13) extends parallel to and near to one longitudinal side of the retaining member (5) and the lateral edge disposed on its other longitudinal side is obliquely bent in such a way that it can be brought into engagement with the claw (10) by swivelling the number plate (3) about the initially engaged opposing peripheral edge.

6. A number plate with a base according to any one of Claims 1 to 5, characterised in that a locking plate (15) can be secured in the recess under the retaining member (5) and in the assembled condition is applied with upwardly bent peripheral edges under pretension against the outsides of the webs (9) of the number plate (3).

7. A number plate with a base according to any one of Claims 1 to 6, characterised in that on its short ends the number plate (3) also has peripheral edges (14) bent rearwards from the visible surface.

8. A number plate with a base according to Claim 1 or 2, characterised in that the resilient means is a separate part (6) of an elastic material, for example spring steel or foamed material, which can be secured to the retaining member (5) or the number plate (3).

9. A number plate with a base according to any one of the preceding Claims, characterised in that the retaining member (5) can be secured to the supporting part (1) by screws (4) with heads, nuts or washers applied to the retaining member over a large area.

10. A number plate with a base according to Claim 9, characterised in that the screws are self-tapping screws of hardened steel for sheet material.

## Revendications

1. Plaque minéralogique (3) avec un support antivol pour la fixation sur une pièce de support (1) d'un véhicule, les grands côtés de la plaque minéralogique (3) ayant, sur le côté arrière, chaque fois une branche (9) dont le bord libre est en forme de griffe (10) et le support est une pièce de fixation (5), élastique, qui s'accroche par ses arêtes latérales recourbées vers la pièce de support (1) dans les griffes (10), caractérisée en ce que les branches (9) sont formées par les arêtes longitudinales recourbées de la plaque minéralogique (3) et les griffes (10) sont recourbées vers l'intérieur, un moyen à ressort (6, 13) est tendu entre la pièce de fixation (5) et la plaque minéralogique (3), perpendiculairement à sa surface visible, lors de l'encliquetage dans la plaque minéralogique (3), et la pièce de fixation (5) ainsi que la plaque minéralogique (3) sont prévues pour être fixées dans une partie en creux dont le bord entoure avec un faible jeu le bord de la plaque minéralogique (3) à l'état monté.

2. Plaque minéralogique avec support selon la revendication 1, caractérisée en ce que la partie en creux est réalisée dans une sous-plaque (2) qui se fixe entre la pièce de fixation (5) et la pièce de support (1) et entoure, à l'état monté, avec un bourrelet marginal (8), le bord de la plaque minéralogique (3), avec un faible jeu.

3. Plaque minéralogique avec support selon la revendication 1 ou 2, caractérisée en ce que la pièce de fixation (5) est une tôle essentiellement plane à l'exception des arêtes latérales recourbées, avec des organes d' écartement (12) prévus sur sa face inférieure et qui se fixent sur la pièce de support (1).

4. Plaque minéralogique avec support selon l'une des revendications 1 à 3, caractérisée en ce que le moyen à ressort est formé par la pièce de fixation (5), élastique, qui, à l'état monté, s'appuie par au moins une nervure (13) contre la face arrière de la plaque minéralogique (3).

5. Plaque minéralogique avec support selon la revendication 4, caractérisée en ce que la nervure (13) est parallèle et voisine d'un grand côté de la plaque de fixation (5) et l'arête latérale prévue sur l'autre coté longitudinal est recourbée en biais pour que par basculement de la plaque (3) autour de l'arête du bord opposé, mise la première en prise, elle vienne en prise avec la griffe (10).

6. Plaque minéralogique avec support selon l'une des revendications 1 à 5, caractérisée en ce que dans la cavité, sous la pièce de fixation (5), on a fixé une tôle de sécurité (15) qui, à l'état monté, s'appuie par des arêtes du bord recourbé vers le haut, avec précontrainte contre les côtés extérieurs des branches (9) de la plaque (3).

7. Plaque minéralogique avec support selon l'une des revendications 1 à 6, caractérisée en ce que la plaque (3) possède également, sur ses petits côtés, des arêtes latérales (14) recourbées vers l'arrière par rapport à la surface visible.

8. Plaque minéralogique avec support selon la revendication 1 ou 2, caractérisée en ce que le moyen à ressort est une pièce separée (6) fixée sur la pièce de fixation (5) ou la plaque minéralogique (3), en étant réalisée en une matière élastique comme par exemple de l'acier à ressort ou de la mousse.

9. Plaque minéralogique avec support selon l'une des revendications précédentes, caractérisée en ce que la pièce de fixation (5) se fixe sur la pièce de support (1) par des vis (4) s'appuyant par leurs têtes, écrous ou rondelles sur la pièce de fixation suivant une surface importante.

10. Plaque minéralogique avec support selon la revendication 9, caractérisée en ce que les vis sont des vis auto-forantes (4) en acier traité.
